# EUROPEAN PATENT APPLICATION

(11) **EP 1 852 330 A1**
(43) Date of publication of application: **07.11.2007**
(21) Application number: 06713922.0
(22) Date of filing: 10.02.2006
(51) Int. Cl.: B62D 6/00, B62D 5/04

(54) **CONTROLLER OF ELECTRIC POWER STEERING DEVICE**

(30) Priority: 24.02.2005 JP 2005048138
(71) Applicant: NSK LTD., Shinagawa-ku, Tokyo 141-8560 (JP)
(72) Inventor: MORI, Kenji, Gunma, 3718527 (JP); SAKAGUCHI, Toru, Gunma, 3718527 (JP)
(74) Representative: Hooiveld, Arjen Jan Winfried
(86) International application number: PCT/JP2006/302781
(87) International publication number: WO 2006/090639

(57) **Abstract**

In a control apparatus of an electric power steering apparatus structured such as to control a motor applying a steering assist force to a steering mechanism on the basis of a current command value calculated from a steering assist command value calculated on the basis of a steering torque generated in a steering shaft and a current value of the motor, it is always possible to execute a high-performance control regardless of a steering speed, by setting a first differential compensator and a second differential compensator inputting a steering torque, making a sampling cycle of the second differential compensator slower than a sampling cycle of the first differential compensator, and adding outputs of the first differential compensator and the second differential compensator to the steering assist command value.

## Description

### Technical Field

The present invention relates to a control apparatus of an electric power steering apparatus structured such that a steering assist force generated by a motor is applied to a steering system of a motor vehicle or a vehicle, and more particularly to a control apparatus of an electric power steering apparatus structured such that a safe steering performance is applied by applying a continuous steering feeling by an inexpensive structure.

### Background Art

An electric power steering apparatus energizing a steering apparatus of a motor vehicle and a vehicle by an assist force on the basis of a rotating force of the motor is structured such as to energize a steering shaft or a rack shaft by the assist force by applying a driving force of the motor by means of a transmission mechanism such as gears, a belt or the like via a speed reducer.

The conventional electric power steering apparatus mentioned above executes a feedback control of a motor current for accurately generating an assist torque (a steering auxiliary torque). The feedback control is structured such as to regulate a motor applying voltage so that a difference between a current control value and adetectedmotor current value becomes small or "0", and the regulation of the motor applying voltage is generally executed by regulating a duty ratio of a pulse width modulation (PWM) control.

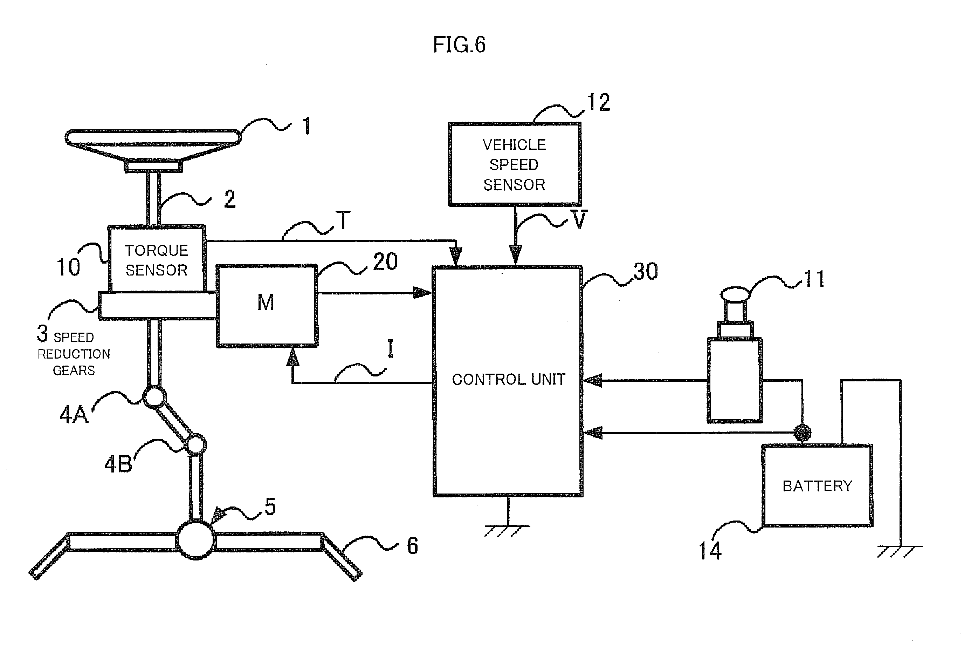

In this case, a description will be given of a general structure of the electric power steering apparatus with reference to FIG. 6.

A column shaft 2 of a steering handle 1 is coupled to a tie rod 6 of steered wheels via reduction gears 3, universal joints 4A and 4B and a pinion-rack mechanism 5. The column shaft 2 is provided with a torque sensor 10 detecting a steering torque of the steering handle 1, and a motor 20 assisting a steering force of the steering handle 1 is coupled to the column shaft 2 via the reduction gears 3. An electric power is supplied from a battery 14 to a control unit 30 controlling the power steering apparatus, and an ignition signal is inputted to the control unit 30 from an ignition key 11. The control unit 30 carries out an operation of a steering assist command value I of an assist command on the basis of a steering torque T detected by the torque sensor 10 and a vehicle speed V detected by a vehicle speed sensor 12, and controls an electric current supplied to the motor 20 on the basis of the calculated steering assist command value I.

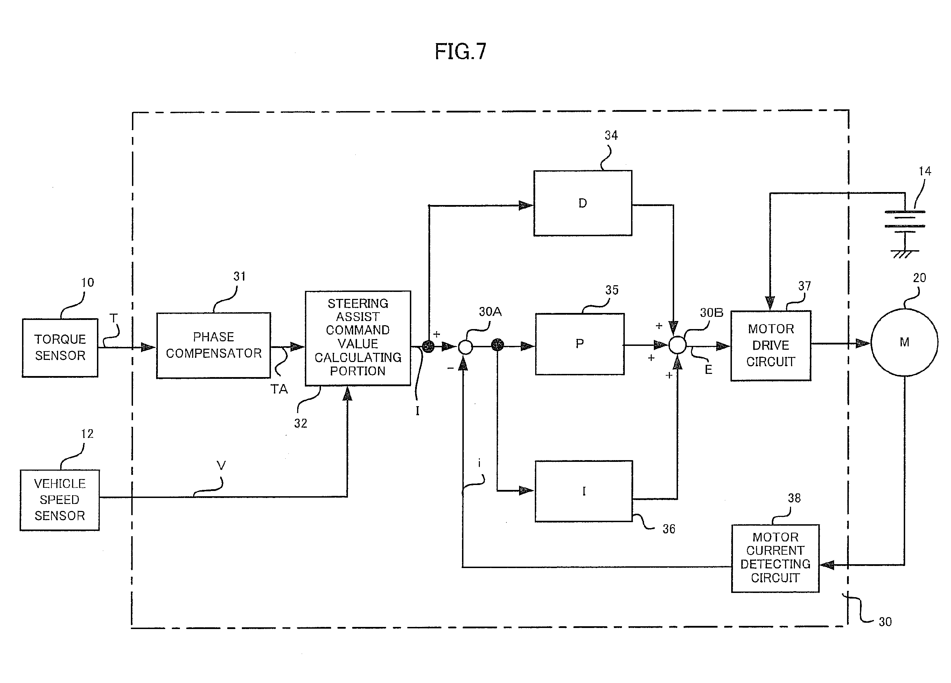

The control unit 30 is mainly comprised of a CPU (including an MPU or an MCU) . A general function executed by a program in an inner portion of the CPU is shown in FIG. 7. For example, a phase compensator 31 does not indicate a phase compensator serving as an independent hardware, but indicates a phase compensating function executed by the CPU or the program.

A description will be given of a function and an operation of the control unit 30 with reference to FIG. 7. The steering torque T detected by the torque sensor 10 so as to be inputted is phase-compensated by the phase compensator 31 for improving a stability of the steering system, and a phase-compensated steering torque TA is inputted to a steering assist command value calculating portion 32. Further, the vehicle speed V detected by the vehicle speed sensor 12 is also inputted to the steering assist command value calculating portion 32. The steering assist command value calculating portion 32 decides a steering assist command value I corresponding to a control target value of the electric current supplied to the motor 20 on the basis of the inputted steering torque TA and vehicle speed V. The steering assist command value I is inputted to a differential compensator 34 of a feedforward system for increasing a response speed as well as being inputted to a subtracter 30A, and an error (I - i) of the subtracter 30A is inputted to an integration operating portion 36 for improving a characteristic of a feedback system as well as being inputted to a proportional operating portion 35. The outputs of the differential compensator 34, the proportional operating portion 35 and the integration operating portion 36 are respectively inputted to an adder 30B, and a current control value E corresponding to a result of addition in the adder 30B is inputted as a motor drive signal to a motor drive circuit 37 . A motor current value i of the motor 20 is detected by a motor current detecting circuit 38, and the motor current value i is feedbacked to the subtracter 30A.

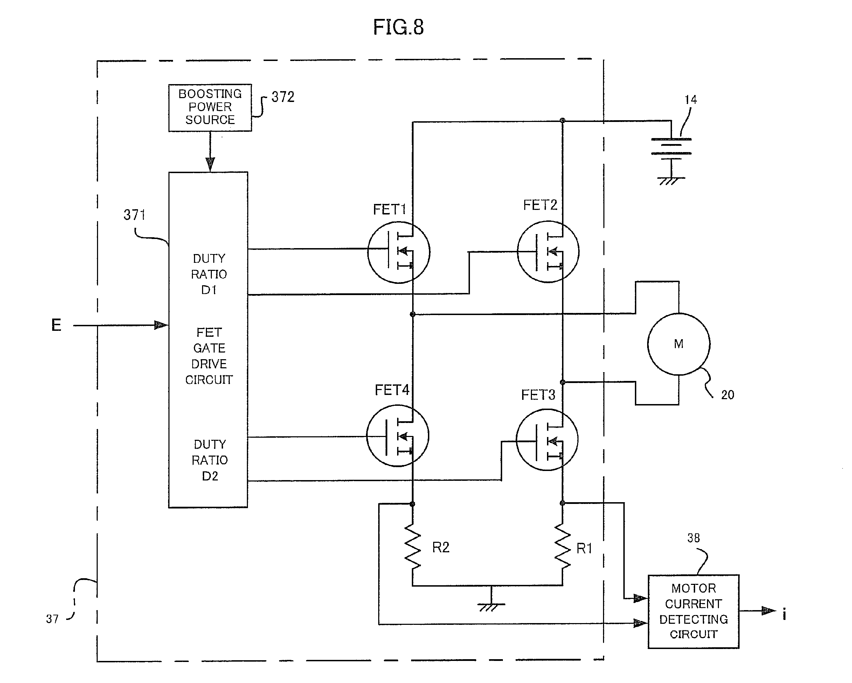

A description will be given of a structure example of the motor drive circuit 37 with reference to FIG. 8.

The motor drive circuit 37 is comprised of an FET gate drive circuit 371 driving each of gates of field effect transistors (FET) FET1 to FET4 on the basis of the current control value E from the adder 30B, an H-bridge circuit comprising the FET1 to FET4, a boosting power source 372 driving high sides of the FET1 and the FET2, and the like. The FET1 and the FET2 are turned on and off by a PWM signal of a duty ratio D1 determined on the basis of the current control value E, and a magnitude of an electric current i actually flowing through the motor 20 is controlled. The FET3 and the FET4 are driven by a PWM signal of a duty ratio D2 defined by a predetermined direct function expression ("D2 = a · D1 + b" in which "a" and "b" are constant numbers) in a region having the small duty ratio D1, and are turned on and off in correspondence to a rotational direction of the motor 20 determined by a sign of the PWM signal after the duty ratio D2 reaches 100%.

In the control apparatus of the electric power steering apparatus mentioned above, as shown in Japanese Patent Application Laid-open No. 2000-95131 A, there is proposed an apparatus adding a value which is in proportion to a differential of the steering torque to an assist amount (a steering auxiliary command value) for increasing a response of the control system, for the purpose of improving a response of the assist torque and improving a stability of a torque control system.

Further, in Japanese Patent Application Laid-open No. 2000-142433 A, the structure is made such that a plurality of phase compensators are provided so as to switch a characteristic for increasing a motor response at a time of suddenly steering without applying any small vibration to the steering handle at a time of keeping steering and gently steering.

In the control apparatus mentioned above, the compensated value of the torque is calculated by using an approximate differential or a difference, and the current command value (current control value) is set by adding the compensated value to the steering assist command value calculated on the basis of the steering torque (including the vehicle speed). In the case that the steering speed is comparatively high, a cycle of the torque fluctuation becomes short, however, the differential compensator having a sufficiently high calculating cycle can sufficiently detect the change of the torque, and can compensate so that the torque fluctuation becomes small.

On the other hand, in the case that the steering speed is low, a fluctuating cycle of the toque becomes long, however, in the case that the change of the torque is longer than the cycle of the differential operation at this time, the differential value is small, and there is a problem that the torque change tends to be affected by a noise. In this case, if it is intended to compensate by multiplying by a large gain, a stability of the control system may be lowered, or an abnormal noise or a vibration may be generated from the motor or a power transmission mechanism portion.

In this connection, the present invention is made by taking into consideration the above circumstances, and an object of the present invention is to provide a control apparatus of an electric power steering apparatus which can always execute a high-performance control regardless of a steering speed.

### Disclosure of the Invention

The present invention relates to a control apparatus of an electric power steering apparatus structured such as to control a motor for applying a steering assist force to a steering mechanism on the basis of a current command value calculated from a steering assist command value calculated on the basis of a steering torque generated in a steering shaft and a current value of the motor, and the object mentioned above of the present invention is achieved by a structure in which the control apparatus is provided with a first differential compensator and a second differential compensator inputting a steering torque, a sampling cycle of the second differential compensator is slower than a sampling cycle of the first differential compensator, and outputs of the first differential compensator and the second differential compensator are added to the steering assist command value.

The object mentioned above of the present invention can be more effectively achieved by limiting the output of the second differential compensator by "0" or a value equal to or less than a predetermined value in the case that an absolute value of the steering speed is larger than a previously set value, or limiting the output of the second differential compensator by "0" or a value equal to or less than a predetermined value in the case that an absolute value of the current control value or an absolute value of the steering assist command value is smaller than a previously set value, or limiting the output of the second differential compensator by "0" or a value equal to or less than a predetermined value in the case that the vehicle speed is higher than a previously set value, or varying the output of the second differential compensator in correspondence to the current control value or the steering assist command value, or setting a filter for removing a noise or removing an aliasing in the input of the second differential compensator.

### Brief Description of the Drawings

In the accompanying drawings:
FIG. 1 is a block structure diagram showing a first embodiment in accordance with the present invention;
FIG. 2 is a characteristic view showing a calculation example of a steering assist command value calculating portion;
FIG. 3 is a flow chart showing an operation example of a condition determining portion;
FIG. 4 is a block structure view showing a second embodiment in accordance with the present invention;
FIG. 5 is a view showing a characteristic example of a gain portion;
FIG. 6 is a view showing a structure example of a general electric power steering apparatus;
FIG. 7 is a block structure view showing an example of a control unit; and
FIG. 8 is a wire connection view showing an example of a motor driving circuit.

### Best Mode for Carrying Out the Invention

In accordance with the present invention, it is possible to obtain a compensated value in which a noise is reduced with respect to a torque fluctuation having a slow cycle, by newly adding a second differential compensator having a slow sampling cycle, whereby it is possible to make the torque fluctuation small. If the sampling cycle is slow, there is a risk that a stability is deteriorated at a time of a high-speed steering, and a driver feels an uncomfortable steering torque fluctuation. Accordingly, in accordance with the present invention, in the case that the steering speed is higher than a previously set value, an output of the second differential compensator is limited by "0" or a value equal to or less than such a value (hereinafter, refer to as a "predetermined value") that the stability is not deteriorated or the uncomfortable steering torque fluctuation is not generated, for example, a value equal to a compensated current limit value corresponding to a steering torque fluctuation 0.3 [Nm] . Further, since a magnitude of the torque fluctuation becomes smaller in accordance that the current value becomes smaller, in the case that the current command value or the steering assist command value is smaller than the current value at which the fluctuation of the torque counts for nothing, the output of the second differential compensator is limited by "0" or the value equal to or less than the predetermined value.

Further, it is possible to more effectively compensate by regulating such that an amount of compensation is enlarged in correspondence to the current command value or the steering assist command value. In the case that the vehicle speed is comparatively high, the necessary current is small and the torque fluctuation becomes small. Therefore, in accordance with the present invention, in the case that the vehicle speed is higher than the previously set value, the output of the second differential compensator is limited by "0" or the value equal to or less than the predetermined value.

A description will be given of embodiments in accordance with the present invention with reference to the accompanying drawings.

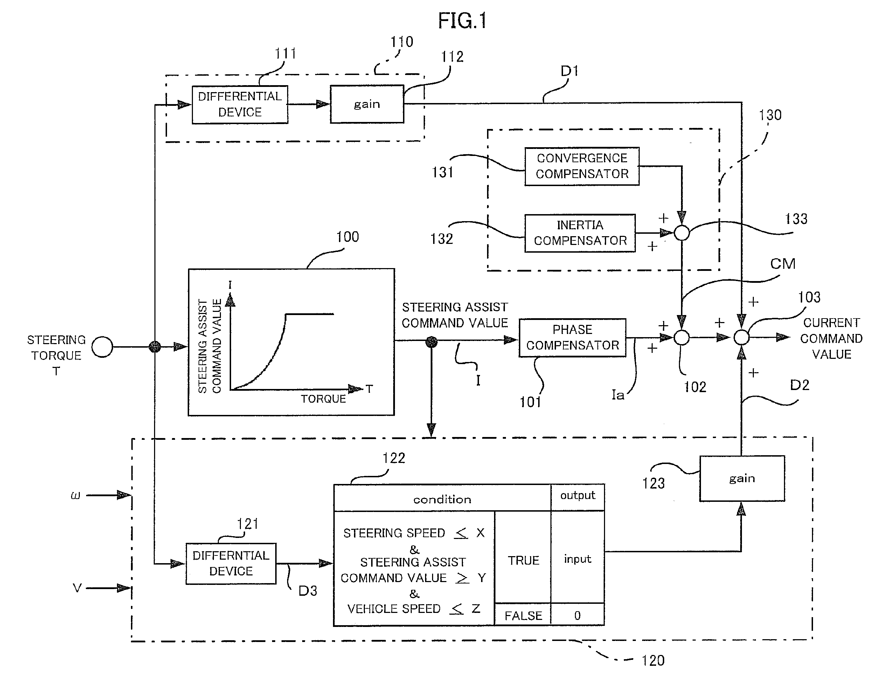

FIG. 1 shows a first embodiment in accordance with the present invention. A steering torque T from a torque sensor (not shown) is inputted to a differential device 111 in a first differential compensator 110 and a differential device 121 in a second differential compensator 120 as well as being inputted to a steering assist command value calculating portion 100. A steering assist command value I calculated by the steering assist command value calculating portion 100 is phase-compensated by a phase compensator 101 as well as being inputted to the second differential compensator 120, a phase-compensated steering assist command value Ia is inputted to an adder 102, and is added to a compensation signal CM from a compensating portion 130, and a result (Ia + CM) of addition is further inputted to an adder 103. Further, a steering speed ω and a vehicle speed V are inputted to the second differential compensator 120. In this case, the steering speed ω may be constituted by a speed estimated by using an angle sensor of a motor, the angle sensor provided in a steering shaft, or by using a terminal voltage and a terminal current of the motor.

The first differential compensator 110 is constituted by the differential device 111 and a gain portion 112, and a differential compensation signal D1 of the steering torque T is inputted to the adder 103. A sampling cycle of the first differential compensator 110 is set to "N" [msec]. Further, the second differential compensator 120 is constituted by the differential device 121, a condition determining portion 122 and a gain portion 123, and a differential compensation signal D2 of the steering torque T is inputted to the adder 103. A sampling cycle of the second differential compensator 120 is set to "M" (> N) [msec], which is slower than the sampling cycle N of the first differential compensator 110. The condition determining portion 122 determines a condition on the basis of the steering speed ω, the steering assist command value I and the vehicle speed V, outputs as it is in the case the determination is true, and sets the output to "0" in the case that the determination is false. The output of the condition determining portion 122 is multiplied by a gain in the gain portion 123 so as to come to the compensation signal D2. Further, the compensating portion 130 has a convergence compensator 131 and an inertia compensator 132, each of outputs of the convergence compensator 131 and the inertia compensator 132 is added by an adder 133, and a result of addition is inputted as the compensation signal CM to the adder 102. A result of addition of the adder 103 is inputted as a current control value to the control portion for the proportional integral mentioned above, and the motor is controlled.

In this case, the phase compensator 101 may be provided in a preliminary stage of the steering assist command value calculating portion 100, and the steering assist command value calculating portion 100 can calculate the steering assist command value I on the basis of the steering torque T and the vehicle speed V.

In the structure mentioned above, an operation thereof will be described below.

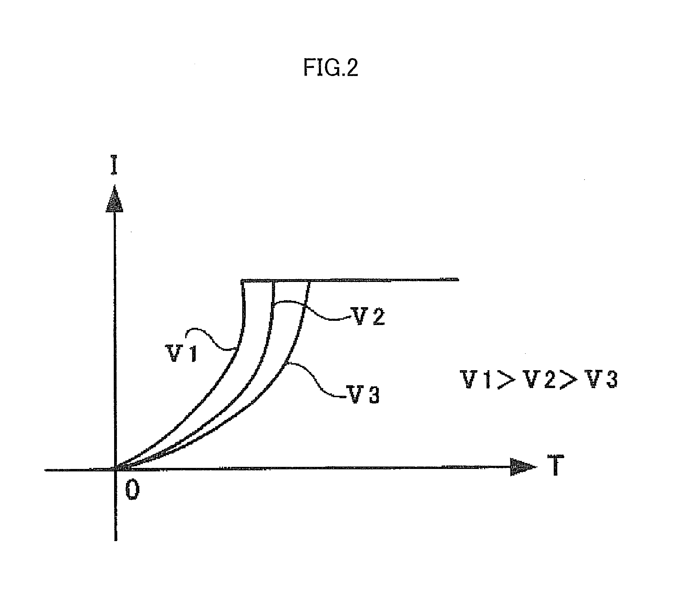

The steering assist command value calculating portion 100 calculates the steering assist command value I in accordance with the inputted steering torque T, for example, on the basis of a characteristic as shown in FIG. 2, and the phase compensator 101 executes a phase compensation of the steering assist command value I for increasing a stability of the steering system. The steering assist command value I is calculated on the basis of the steering torque T in FIG. 1, however, may be calculated by using the vehicle speed V as a parameter.

Further, the steering torque T is differential-compensated at a sampling cycle N in the first differential compensator 110 so as to be inputted to the adder 103. The first differential compensator 110 keeps a response in a high frequency band, and compensates a friction of the motor and an influence of the inertia. In other words, the first differential compensator 110 aims to improve a response of an assist torque and improve a stability of the torque control system, and adds the differential compensation signal D1 which is in proportion to the differential of the steering torque T to an assist amount (the steering assist command value) for increasing the response of the control system. Since the differential compensation signal D1 obtained by differentiating the steering torque T is added to the assist amount as mentioned above, a negative gain is applied at a time when the steering handle is returned as described in Japanese Patent Application Laid-open No. 2000-95131 A, that is, at a time when the steering angle is reduced, whereby it is possible to prevent the assist amount (the steering assist command value) from being suddenly reduced. As a result, it is possible to apply a large hysteresis in a high torque region, and apply a small hysteresis in a low torque region near a neutral point.

Further, the convergence compensator 131 of the compensating portion 130 is structured such as to apply a brake to a motion that the steering handle swings and turns for improving a convergence of a yaw of the vehicle, and the inertia compensator 132 is structured such as to assist an amount corresponding to a force generated on the basis of the inertia of the motor, thereby preventing an inertia feeling or a response of the control from being deteriorated. The compensation signal CM from the compensating portion 130 is added to the steering assist command value Ia in the adder 102. In this case, the compensating portion 130 may be additionally provided with a self-aligning torque (SAT) compensating portion.

On the other hand, the second differential compensator 120 gain-regulates a differential signal D3 obtained by differentiating the steering torque T by the differential device 121 in the gain portion 123 in accordance with the result of determination of the condition determining portion 122, and adds the gain-regulated signal as the differential compensation signal D2 to the adder 103.

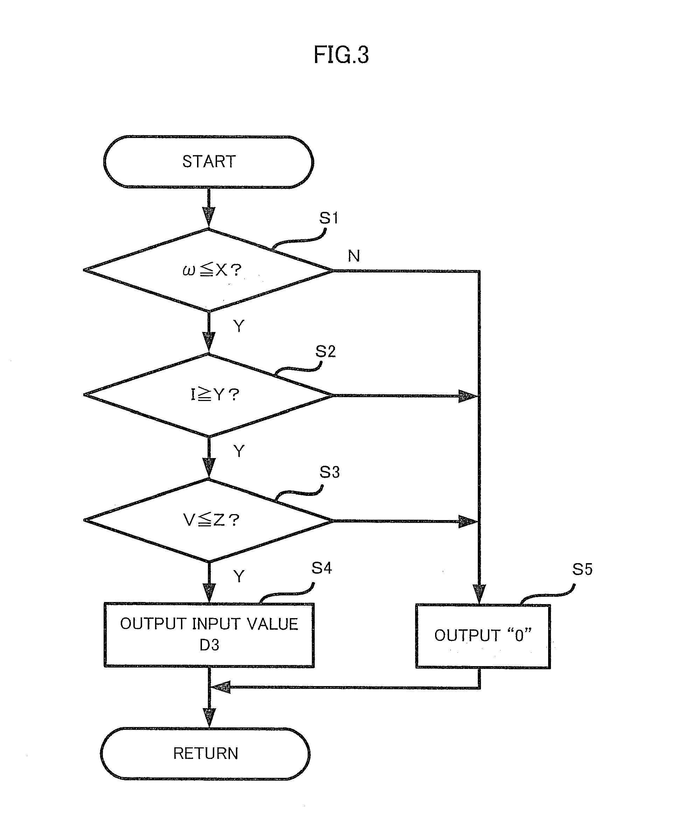

The condition determining portion 122 determines in accordance with a flowchart shown in FIG. 3. In other words, the condition determining portion 122 first determines whether or not the steering speed ω is equal to or less than a previously set value X (Step S1), further determines whether or not the steering assist command value I is equal to or more than a previously set value Y in the case that the steering speed ω is equal to or less than the value X (Step S2), further determines whether or not the vehicle speed V is equal to or less than a previously set value Z in the case that the steering assist command value I is equal to or more than the value Y (Step S3), and outputs the input value D3 in the case that the vehicle speed V is equal to or less than the value Z (Step S4). Further, in the case that the steering speed ω is larger than the value X in the Step S1 mentioned above, in the case that the steering assist command value I is smaller than the value Y in the Step S2 mentioned above, and in the case that the vehicle speed V is larger than the value Z in the Step S3 mentioned above, the condition determining portion 122 outputs "0" (Step S5).

In this case, the order or the like of the Steps S1 to S3 mentioned above is optional, and it is sufficient to execute a comparison of the steering speed ω, the steering assist command value I and the vehicle speed V, or any one of them or a combination thereof, in consequence. Further, in the structure mentioned above, the output in the Step S5, the output is set to "0", however, may be limited by a value equal to or less than a predetermined value close to "0". Further, a filter for removing a noise or removing an aliasing may be provided in the input portions of the first differential compensator 111 and the second differential compensator 120.

As mentioned above, in accordance with the present invention, since there is provided the second differential compensator 120 which is slower than the sampling cycle of the first differential compensator 110, it is possible to obtain the compensated value which is reduced noise with respect to the torque fluctuation having the slow cycle, and it is possible to make the influence of the torque fluctuation small. If the sampling cycle of the second differential compensator 120 is slow, there is a risk that the stability is deteriorated at a time of the high-speed steering. Accordingly, in the case that the steering speed ω is larger than the previously set value (X), the structure is made such as to limit the differential compensation signal D2 corresponding to the output of the second differential compensator 120 by "0" (or the value equal to or less than the predetermined value). Further, since the magnitude of the fluctuation of the steering torque T becomes smaller in accordance that the current value becomes smaller, the structure is made such as to limit the differential compensation signal D2 corresponding to the output of the second differential compensator 120 by "0" (or the value equal to or less than the predetermined value) in the case that the steering assist command value I (or the current command value) is smaller than the current value (Y) at which the torque fluctuation counts for nothing. In accordance with the present invention, in the case that the vehicle speed V is comparatively high, the structure is made such as to utilize the fact that the necessary current is small and the torque fluctuation becomes small, and in the case that the vehicle speed V is larger than the previously set value (Z), the structure is made such as to limit the differential compensation value D2 corresponding to the output of the second differential compensator 120 by "0" (or the value equal to or less than the predetermined value).

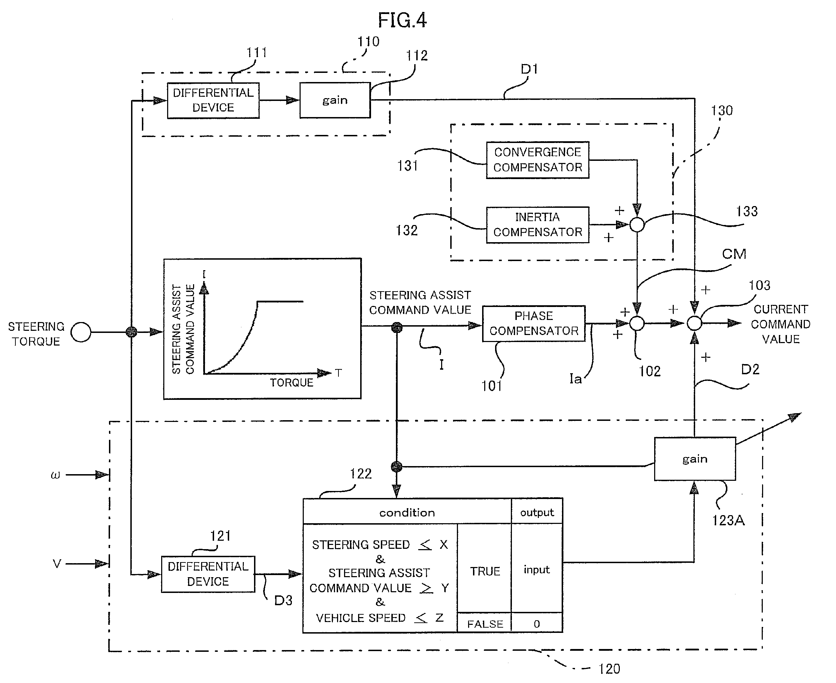

Next, a description will be given of a second embodiment in accordance with the present invention with reference to FIG. 4. FIG. 4 corresponds to FIG. 1, and a description of the same portion will be omitted by attaching the same reference numerals.

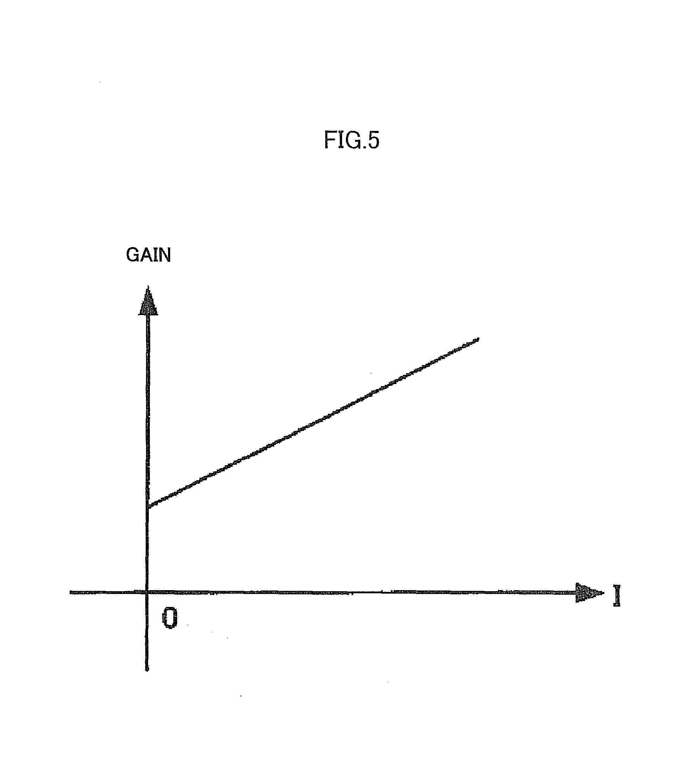

In the second embodiment, the structure is made such that a gain of a gain portion 123A is varied in correspondence to the steering assist command value I. In other words, since it is possible to more effectively compensate by regulating such that an amount of compensation becomes larger in correspondence to the steering assist command value I (or the current command value), the gain of the gain portion 123A is changed, for example, in accordance with a characteristic shown in FIG. 5. Accordingly, it is possible to achieve a more effective compensation.

### Industrial Applicability

In accordance with the control apparatus of the electric power steering apparatus on the basis of the present invention, the value which is in proportion to the differential of the steering torque is added to the assist amount (the steering assist command value) for increasing the response, for the purpose of improving the response of the assist torque and improving the stability of the torque control system. Accordingly, it is possible to prevent the assist amount (the steering assist command value) from being suddenly reduced, by applying the negative gain at a time when the steering angle is reduced, whereby it is possible to control the high-performance control.

Further, in accordance with the present invention, since the steering torque is compensated by adding the second differential compensator having the slow sampling cycle, it is possible to make the torque fluctuation having the slow cycle small, and it is possible to obtain the further smooth steering feeling, so that the present invention can be applied to the high-performance electric power steering apparatus which does not apply an uncomfortable feeling and a sense of discomfort to the driver.

## Claims

1. A control apparatus of an electric power steering apparatus structured such as to control a motor applying a steering assist force to a steering mechanism on a basis of a current command value calculated from a steering assist command value calculated on a basis of a steering torque generated in a steering shaft and a current value of a motor,
wherein said control apparatus is provided with a first differential compensator and a second differential compensator inputting a steering torque, a sampling cycle of said second differential compensator is slower than a sampling cycle of said first differential compensator, and outputs of said first differential compensator and said second differential compensator are added to said steering assist command value.

2. A control apparatus of an electric power steering apparatus as claimed in claim 1, wherein said control apparatus limits an output of said second differential compensator by "0" or a value equal to or less than a predetermined value in a case that an absolute value of said steering speed is larger than a previously set value.

3. A control apparatus of an electric power steering apparatus as claimed in claim 1 or 2, wherein said control apparatus limits an output of said second differential compensator by "0" or a value equal to or less than a predetermined value in a case that an absolute value of said current control value or an absolute value of said steering assist command value is smaller than a previously set value.

4. A control apparatus of an electric power steering apparatus as claimed in any one of claims 1 to 3, wherein said control apparatus limits an output of said second differential compensator by "0" or a value equal to or less than a predetermined value in a case that a vehicle speed is higher than a previously set value.

5. A control apparatus of an electric power steering apparatus as claimed in any one of claims 1 to 4, wherein said control apparatus varies an output of said second differential compensator in correspondence to said current control value or said steering assist command value.

6. A control apparatus of an electric power steering apparatus as claimed in any one of claims 1 to 5, wherein said control apparatus executes a filter process for removing a noise or removing an aliasing in an input of said second differential compensator.
